# EUROPÄISCHE PATENTANMELDUNG

(11) **EP 1 815 915 A2**
(43) Veröffentlichungstag der Anmeldung: **08.08.2007**
(21) Anmeldenummer: 07100084.8
(22) Anmeldetag: 04.01.2007
(51) Int. Cl.: B05D 1/42, B05D 3/06

(54) **Verfahren zur Herstellung von vielseitig einsetzbaren Kunststoffprodukten mit bevorzugt abriebfester Oberfläche**

(30) Priorität: 18.01.2006 DE 102006002595
(71) Anmelder: tesa AG, 20253 Hamburg (DE)
(72) Erfinder: Dr. Dollase, Thilo, 22397 Hamburg (DE); Escudero Vallejo, Aranzazu, 22769 Hamburg (DE); Dr. Keite-Telgenbüscher, Klaus, 22529 Hamburg (DE); Dr. Stadler, Stefan, 22359 Hamburg (DE); Blank, Carsten, 21255 Tostedt (DE)
(74) Vertreter: Stubbe, Andreas

(57) **Zusammenfassung**

Die Erfindung betrifft ein Verfahren zur Herstellung von vielseitig einsetzbaren Kunststoffprodukten, vorzugsweise von einseitig selbstklebenden Produkten, die eine abriebfeste und flexible Schutzschicht tragen, welche sich durch besonders hohe Oberflächenqualität insbesondere im Hinblick auf ihre optischen Eigenschaften auszeichnet.

## Beschreibung

Die Erfindung betrifft ein Verfahren zur Herstellung von vielseitig einsetzbaren Kunststoffprodukten, vorzugsweise von einseitig selbstklebenden Produkten, die eine bevorzugt abriebfeste und flexible Schutzschicht tragen, welche sich durch besonders hohe Oberflächenqualität insbesondere im Hinblick auf ihre optischen Eigenschaften auszeichnet.

### Stand der Technik

Kunststoffe haben sich längst als Materialien für vielfältige Anwendungen etabliert und kommen heutzutage in unterschiedlichster Form wie beispielsweise als Bauteile, als Verkleidungselemente und für Verglasungen zum Einsatz. In vielen Bereichen haben sie dabei klassische Werkstoffe wie Metall, Holz, Keramik oder Silikatgläser abgelöst. Einige Anwendungen wären darüber hinaus ohne Kunststoffe gar nicht realisierbar. Die Erfolgsgeschichte der Kunststoffe ist sicherlich zum einen in ihrer recht einfachen Verarbeitbarkeit begründet. Folien, Platten und Profile können in kontinuierlichen Prozessen beispielsweise durch Extrusion vorteilhaft hergestellt werden. Elemente mit komplizierterer Geometrie lassen sich beispielsweise durch Spritzgusstechniken realisieren. Formgebungsverfahren sind bei vergleichsweise niedrigen Temperaturen durchführbar. Weitere Vorteile umfassen das gegenüber klassischen Rohstoffen reduzierte Gewicht. Trotz dieser Vorteile weisen Kunststoffe aber je nach Sorte für spezifische Anwendungen auch Verbesserungspotenzial auf. Im Allgemeinen reicht bei Kunststoffen die Alterungsbeständigkeit und generell die Resistenz gegenüber äußeren Einflüssen nicht an diejenige von vielen klassischen Werkstoffen heran. Ansätze, um im Hinblick auf das Alterungsverhalten zu verbesserten Werkstoffen auf Kunststoffbasis zu gelangen, beinhalten die Verwendung von Zuschlagstoffen, wie Alterungsschutzmitteln, Antioxidantien und UV-Schutzmitteln. Ein alternativer Weg, um kunststoffbasierende Materialien zu optimieren und für eine noch breitere Palette von Anwendungen einsetzbar zu machen, liegt darin, die Oberflächen der Werkstücke mit einem Schutzlack zu beschichten. Diese Variante bietet sich insbesondere auch dann an, wenn die Werkstücke gegenüber einer anderen Art äußerer Einflüsse robuster ausgerüstet werden sollen, nämlich der mechanischen Beanspruchung ihrer Oberfläche durch Abrieb oder Zerkratzen.

Für die resistente Ausrüstung von Kunststoffsubstraten gegenüber solchen mechanischen Beanspruchungen ist eine Vielzahl von Lacksystemen von einer Reihe von Anbietern erhältlich. Ein Großteil der verfügbaren Lackrezepturen ist thermisch härtbar. Damit ist es möglich, Beschichtungen auch auf dreidimensionalen Gebilden mit kompliziert gestalteter Oberfläche vollständig auszuhärten. Jedoch dürfen dabei die Härtungstemperaturen die Obergrenze der Temperaturstabilität der Kunststoffsubstrate nicht übersteigen, was je nach Kunststoffsorte und Aushärtungsmechanismus nicht immer möglich ist.

Um dieses Problem zu umgehen, wurden daher Lackrezepturen entwickelt, die sich durch Bestrahlung, insbesondere durch Bestrahlung mit ultravioletter Strahlung oder durch Elektronenstrahlen, aushärten lassen. Ein Beispiel für Anwendungen für Polycarbonatsubstrate ist in US 4,198,465 durch General Electric gegeben. Ein solcher Aushärtungsprozess läuft im Allgemeinen bei niedrigeren Temperaturen ab, so dass die Wärmebelastung der Kunststoffsubstrate wesentlich geringer ist, als es bei der Verwendung thermisch härtender Schutzlacksysteme der Fall wäre. Ein weiterer Vorteil der Strahlenhärtung von Lacken liegt in der einfachen Implementierung in kontinuierliche Prozesse insbesondere für bahnförmige Substrate. Einen Überblick über die Technologie der strahlenhärtbaren Lacke und vielfältige Verwendungsmöglichkeiten kann man sich durch Studium von Übersichten verschaffen, die zum Beispiel bei Dowbenko und Kollegen [R. Dowbenko, C. Friedlander, G. Gruber, P. Prucnal, M. Wismer, Progr. Org. Coat., 1983, 11, 71], bei Holman und Oldring [R. Holman, P. Oldring (Hrsg.), UV and EB Curing Formulations for Printing Inks, Coatings and Paints, 2. Aufl., 1988, SITA-Technology, London], in einem mehrbändigen Werk von Oldring [P. Oldring (Hrsg.), Chemistry & Technology of UV & EB Formulations for Coatings, Inks & Paints, 1991, SITA-Technology, London] oder bei C. Decker [C. Decker in Materials Science and Technology, R. W. Cahn, P. Hansen, E. J. Kramer (Hrsg.), Band 18, 1997, Wiley-VCH, Weinheim] zu finden sind.

Zusätzlich zu den oben beispielhaft genannten Formkörpern finden Kunststoffe in einer weiteren Gestaltungsform breite Anwendung als Folien, die zum Beispiel im Verpackungsbereich oder zur Abdeckung von Oberflächen, sei es aus dekorativen Gründen oder zu Schutzzwecken, oder als Trägermaterialien für selbstklebende Produkte eingesetzt werden. Dabei kann es ebenfalls gewünscht sein, die gegenüber der Umgebung exponierte Seite, also denjenigen Teil der Folie, der äußeren Einflüssen besonders stark ausgesetzt ist, in ihrer Resistenz gegenüber beispielsweise mechanischer Belastung wie Abrieb oder Zerkratzen zu optimieren. Auch hier bietet sich der Einsatz von Schutzlacken an.

In einer Reihe von Schriften sind strahlenhärtbare Lackformulierungen, die für die Beschichtung von Kunststofffolien zum Einsatz kommen, beschrieben. Typischerweise ist diesen Formulierungen gemein, dass zumindest eine Sorte eines mehrfachfunktionellen (Meth)acrylats in der Rezeptur vorhanden ist. Durch Einwirkung von geeigneter Strahlung, im Fall der UV-Härtung durch Photoinitiatoren initiiert, werden diese (meth)acrylierten Monomere, Oligomere oder Polymere zur Polymerisation angeregt, so dass sich ein engmaschiges Netzwerk ergibt. Die Rezepturen können diverse weitere Arten an Bestandteilen enthalten. Insbesondere anorganische Partikel sind im Hinblick auf höhere Lackhärten als vorteilhaft einsetzbar beschrieben worden. Beispiele für strahlenhärtbare Lackformulierungen sind in US 4,557,980 der Martin Processing Inc., in US 4,319,811 der GAF Corp., in EP 50 996 B1 der Mitsui Petrochemical, in US 4,310,600 der American Hoechst Corp., in JP 01 266 155 der Sunstar und in US 5,104,929 der 3M zu finden.

Heute sind verschiedene folienförmige Produkte bekannt, die der Beschreibung nach mit Schutzlacken versehen sind oder versehen werden können. Die Aufgabe des Schutzlacks besteht dabei darin, das eigentliche Folienmaterial oder weitere auf ihm befindliche Funktionsschichten gegen äußere Einflüsse widerstandsfähiger zu machen. Beispiele sind in US 6,440,551 durch CPFilms sowie in US 6,329,041 und US 6,638,606 durch Dai Nippon Printing offenbart.

Es besteht jedoch weiterhin der Bedarf an Verfahren, mit Hilfe derer universell einsetzbare (ggf. als spezielle einseitig selbstklebende) Produkte, die mit einer abriebfesten und flexiblen Lackschicht ausgerüstet sind und die durch hohe optische Qualität bestechen, hergestellt werden können. Einseitig selbstklebende Produkte können zum Beispiel Artikel zur vorübergehenden, langandauernden oder permanenten Fixierung auf Substraten sein wie insbesondere selbstklebende Dekorfolien, selbstklebende informationstragende Produkte oder selbstklebende datenspeichernde Produkte, bei denen der optische Eindruck des Dekors, die Lesbarkeit der Information beziehungsweise die Funktionstüchtigkeit der Datenspeicherung in Bezug auf Datenlesbarkeit und/oder Datenschreibbarkeit über einen langen Zeitraum auch trotz mechanischer Beanspruchung der Oberfläche gewährleistet sein soll. Zum anderen fallen unter die Gruppe solcher einseitig selbstklebenden Produkte, die mit einer abriebfesten und flexiblen Lackschicht ausgerüstet sind, auch Schutzfolien, die zur Schonung empfindlicher und kostbarer Oberflächen eingesetzt werden können und dabei eine über einen möglichst langen Zeitraum hinweg auch trotz äußerer mechanischer Belastung möglichst hohe optische Oberflächengüte nicht nur der zu schützenden Oberfläche sondern auch der Schutzfolie selbst bewahren soll.

Für die Herstellung der oben beispielhaft genannten einseitig selbstklebenden Produkte gilt, dass auf ein bevorzugt folienförmiges Vormaterial eine Schutzlackschicht in einer Weise aufgebracht werden kann, so dass die Forderungen nach besonders hoher optischer Qualität dieser optischen Schutzlackschicht erfüllt wird. Hierfür werden einerseits besondere Lackformulierungen benötigt, andererseits aber insbesondere spezielle Beschichtungs- und Aushärtungsverfahren, die diesen anspruchsvollen Anforderungen gerecht werden.

Ein Vorteil strahlenhärtbarer Lackformulierungen liegt darin begründet, dass vollkommen auf Lösungsmittel verzichtet werden kann. Jedoch hängt die Qualität des Beschichtungsbilds dann je nach Viskosität und Zusammensetzung der Lackformulierung zum Teil stark von der Art des Beschichtungsverfahrens ab. Strukturen in der Lackoberfläche, die vom Beschichtungsaggregat herrühren und in mangelndem Verlauf der flüssigen Lackschicht begründet sind, werden typischerweise bei hochwertigen Produkten für anspruchsvolle Anwendungen nicht toleriert. Es besteht daher der Bedarf nach Verfahren, Lackschichten mit hoher Oberflächenqualität und insbesondere ohne jedwede ungewollte Spuren des Beschichtungsaggregates in oder auf der Lackschicht auf einen folienförmigen Träger zu applizieren.

Ein weiterer für die Qualität des herzustellenden Lackfilms kritischer Punkt ist zudem der Aushärtungsschritt. Um eine effiziente Lackhärtung zu gewährleisten, ist dafür Sorge zu tragen, dass die Lackschicht auch tatsächlich vollständig aushärtet. Ein erfolgreiches Ergebnis hängt naturgemäß von der Dosis der eingesetzten Strahlung ab. Da keine beliebig hohen Strahlerleistungen zur Verfügung stehen, sind hierüber die Bahngeschwindigkeit und damit die Menge an produziertem Produkt pro Zeit limitiert. Es sind daher zum einen Rezepturen gesucht, die besonders schnell bei Einwirkung der Strahlung ausreagieren, sowie insbesondere zum anderen Verfahren, die eine beschleunigte Fahrweise erlauben. Negativen Einfluss auf die Produktivität haben im Allgemeinen alle Einflussgrößen, die zu einer reduzierten Reaktivität der Lackformulierung führen. Als besonders wichtig ist in diesem Zusammenhang der Einfluss von Luftsauerstoff zu nennen und zwar vor allem bei dünnen Schichten, wie sie bei der Lackbeschichtung von Substraten wie Kunststofffolien vorkommen können.

Wie alle radikalischen Polymerisationsprozesse, so wird auch die strahlungsinduzierte Aushärtung von strahlenhärtbaren Lackformulierungen durch Anwesenheit von molekularem Sauerstoff, wie er in der Umgebungsluft vorhanden ist, gestört. Die Härtung läuft dann langsamer oder nur unvollkommen ab. Infolgedessen leidet die Qualität der Lackschicht zum Beispiel in Bezug auf ihre Oberflächenhärte oder es kann nicht mit optimaler Geschwindigkeit gefertigt werden.

In der Literatur sind vielfältige Möglichkeiten vorgeschlagen worden, wie der negative Einfluss von Luftsauerstoff auf den Aushärtungsprozess unterdrückt werden kann.

So ist z.B. bekannt, dass Sauerstoff von der aushärtenden Schicht durch Verwendung von flächigen Substraten abgehalten werden kann. So nennt zum Beispiel EP 50 996 B1 der Mitsui Petrochemical die Verwendung einer Polyesterfolie, Peinado und Kollegen den Einsatz von LDPE-Folien [C. Peinado, E. F. Salvador, A. Alonso, T. Corrales, J. Baselga, F. Catalina, J. Polym. Sci. A - Polym. Chem., 2002, 40, 4236] und Studer et al. die Verwendung einer Polypropylenfolie [K. Studer, C. Decker, E. Beck, R. Schwalm, Progr. Org. Coat., 2003, 48, 92]. In allen diesen Fällen werden Schutzfolien eingesetzt, deren Qualitätsgrade im Bezug auf Oberflächenrauhigkeit unbefriedigend sind. Eine Folienoberfläche, die zu einer Lackoberfläche führt, die das menschliche Auge zwar als glänzend empfindet, reicht in hochwertigen Anwendungen nicht aus, um den hohen Anforderungen an Oberflächenglätte zu erfüllen. In solchen hochwertigen Anwendungen werden vielmehr Oberflächengüten gefordert, die auf wesentlich präzisere Weise beispielweise durch den das Profil der Oberflächenrauhigkeit einer Lackschicht oder einer Folie charakterisierenden Rz-Wert (siehe zum Beispiel DIN EN ISO 4287), der für solche anspruchsvollen Anwendungen im Bereich weniger 100 nm liegen kann, wiedergegeben werden.

Für die oben beispielhaft genannten und vorzugsweise einseitig selbstklebenden Produkte ist es z.B. nicht nur erforderlich, dass eine Oberfläche abriebfest ausgerüstet ist, sondern dass auch der optische Eindruck, der u. a. durch die Oberflächenbeschaffenheit des abriebfesten Lacks bestimmt wird, von hochwertiger Qualität ist. So ist es in diesen Fällen insbesondere gewünscht, dass die Oberfläche eine ausgezeichnete Glätte, also eine besonders geringe Oberflächenrauhigkeit und einen besonders ausgeprägten Glanz und damit eine äußerst geringe Trübung (Haze) aufweist. Daher ist es erforderlich, bei der für den Beschichtungs- und Aushärtungsprozess gewählten Verfahrensauslegung nicht nur im Hinblick auf die Aushärtungscharakteristik der Lackschicht zu optimieren, sondern auch dafür Sorge zu tragen, dass nach dem Aushärtungsschritt ein beschichtetes Folienprodukt erhalten wird, das eine einwandfreie Oberflächenqualität aufweist.

### Aufgabe der Erfindung

Der Erfindung lag deshalb die Aufgabe zugrunde, Verfahren zur Verfügung zu stellen, über die Kunststoffprodukte, insbesondere Folienbahnen, mit einer Lackschutzschicht versehen werden können und die erhaltenen Produkte durch hervorragende Oberflächenqualität auf der Lackseite bestechen.

### Wesen der Erfindung

Die Aufgabe kann durch ein spezielles Verfahren zur Beschichtung von vielseitig einsetzbaren Kunststoffprodukten, insbesondere von folienförmigen Materialien, unter Verwendung von abriebfesten und flexiblen Schutzlacken vorteilhaft gelöst werden. Es wird einerseits eine hohe Härtungsgeschwindigkeit durch weitgehenden Ausschluss von Luftsauerstoff von der härtenden Lackschicht gewährleistet und das Verfahren führt gleichzeitig anderseits zu einer überaus hohen Oberflächengüte einer aushärtenden Lackschicht. Das erfindungsgemäße Verfahren ist dadurch gekennzeichnet, dass einer noch nicht ausgehärteten Lackschicht nach der Beschichtung eine Eindeckschicht, z.B. eine so genannte Schutzfolie von besonderer Qualität zukaschiert wird, durch die die Lackschicht durch vorzugsweise Bestrahlung ausgehärtet wird und die nach vollzogener Härtung wieder ausgedeckt wird. Die eingesetzte Eindeckschicht besitzt besondere Eigenschaften insbesondere im Hinblick auf ihre Oberflächenrauhigkeit und optische Qualität. Das erfindungsgemäße Verfahren wird weiter detailliert in der folgenden Beschreibung, im Beispiel und in den Ansprüchen dargestellt.

Das erfindungsgemäße Verfahren zur Herstellung von vielseitig einsetzbaren Kunststoffprodukten umfasst die Schritte
a) Bereitstellen eines Trägermaterials beschichtet mit einer Schutzschicht in Form einer härtbaren flüssigen Lackformulierung,
b) Eindecken mit einer Eindeckschicht, welche durch eine geringe Oberflächenrauhigkeit mindestens zur Lackseite mit einem Rz-Wert von höchstens 0,3 µm und/oder einer geringen Trübung mit einem Haze-Wert von höchstens 5% gekennzeichnet ist,
c) Aushärten der Lackschicht durch die Eindeckschicht und
d) Ablösen der Eindeckschicht.

Das bevorzugt folienförmige Trägermaterial ist gegebenenfalls vorbehandelt und/oder besitzt mindestens eine weitere Funktionsschicht. Die vielseitig einsetzbaren Kunststoffprodukte liegen vorzugsweise in Bahnen mit einer Arbeitsbreite von mindestens 30 cm vor, vorzugsweise von mindestens 50 cm.

Optional weisen die Kunststoffprodukte Klebeschichten auf, vorzugsweise Haftklebeschichten, die wahlweise auf das Endprodukt oder auf ein Vorprodukt aufgebracht werden können. Besonders bevorzugt werden Kunststoffprodukte hergestellt, die einseitig mindestens eine selbstklebende Schicht umfassen.

Die erfindungsgemäß hergestellten Produkte zeichnen sich durch eine Lackoberfläche mit besonders hoher Abriebfestigkeit kombiniert mit Flexibilität aus und zeigen darüber hinaus weitere optische Eigenschaften, wie z.B. Antireflex, hohe oder niedrige Brechungsindices usw. Sie können zusätzlich oder alternativ zur Abriebfestigkeit beliebige funktionale Beschichtungen umfassen, die z.B. besondere elektrische, magnetische oder elektrooptische Eigenschaften zeigen.

Die vorliegende Erfindung betrifft insbesondere auch ein Verfahren zur Herstellung einseitig selbstklebender Produkte, die mit einer abriebfesten und flexiblen Schutzschicht versehen sind und die sich durch eine besonders hohe Oberflächenqualität insbesondere im Hinblick auf ihre optischen Eigenschaften auszeichnen.

Erfindungsgemäß wird eine flüssige strahlenhärtbare Lackformulierung auf ein bevorzugt folienförmiges Trägermaterial beschichtet und auf der beschichteten aber noch nicht ausgehärteten Lackschicht wird die Eindeckschicht zukaschiert, durch die die Lackschicht vorzugsweise durch Bestrahlung ausgehärtet wird. Erfindungsgemäß werden spezielle Eindeckschichten als Sauerstoffbarriereschicht verwendet, über die es möglich ist, dass durch das Eindecken eine optisch besonders hochwertige Oberfläche der Lackschicht generiert wird. Bestrahlung durch diese Schicht hindurch führt nicht nur zu einer Verfestigung und damit Konservierung der hochwertigen Lackoberfläche sondern gleichzeitig auch zu einer effizienten Härtung der Lackschicht, da durch die Anwesenheit der Eindeckschicht für die Aushärtung störender Luftsauerstoff von der reagierenden Lackschicht ferngehalten wird. Erfindungsgemäß einsetzbare Eindeckschichten zeichnen sich durch eine besonders geringe Oberflächenrauhigkeit aus, durch eine hohe Transparenz für die zur Lackhärtung bevorzugt verwendete Strahlung, durch einen geringen Haze-Wert sowie ihr Vermögen, sich nach der Härtung zerstörungsfrei und rückstandslos von der Lackoberfläche wieder ablösen zu lassen. Das erfindungsgemäße Verfahren dient insbesondere zur Herstellung bahnförmiger Materialien mit Bahnbreiten von bevorzugt mindestens 30 cm, sehr bevorzugt von mindestens 50 cm.

Im Sinne dieser Erfindung kann zur Beschichtung des Trägermaterials, bevorzugt eines folienförmigen Materials, durch die Lackformulierung prinzipiell jedes der dem Fachmann bekannten Verfahren ausgewählt werden. Ohne sich einschränken zu wollen, seien beispielhaft Rakelverfahren, Messerverfahren, Walzenverfahren, Sprühverfahren, Tauchverfahren, Bürstenverfahren, Gießverfahren und Druckverfahren, wie beispielsweise Offset- oder Flexodruckverfahren, genannt. Dabei sind auch Kombinationen verschiedener Verfahren denkbar wie beispielsweise das Mayer-Bar-Verfahren, ein Beschichtungsprozess, der Walzen und Rakel miteinander kombiniert, oder Walz/Gieß-Systeme, bei denen Walzen und Rakel miteinander kombiniert sind und die zusätzlich das Prinzip der Gießbeschichtung einbinden. Einige erfindungsgemäß einsetzbare Beschichtungsverfahren wurden beispielsweise durch Scharenberg zusammengestellt [ R. T. Scharenberg in Encyclopedia of Polymer Science and Engineering, H. F. Mark, N. M. Bikales, C. G. Overberger, G. Menges (Hrsg.), Band 3, 2. Aufl., 1985, Wiley, New York]. Eine vorteilhafte Vorgehensweise nutzt das Prinzip des Rasterwalzenauftrags. Dies lässt sich beispielsweise im direct-gravure-Betrieb, bei dem die Rasterwalze die Lackformulierung direkt auf das folienförmige Material überträgt, oder im offset-gravure-Betrieb, bei dem die Rasterwalze den Lack zunächst an eine Offsetwalze übergibt, die diesen wiederum auf das folienförmige Material überträgt, realisieren. Der Antrag der Lackformulierung an die Rasterwalze erfolgt vorteilhaft mittels eines geschlossenen Kammerrakels oder durch Eintauchen der Rasterwalze in eine Wanne, wobei die Lackmenge auf der Rasterwalzenoberfläche dann typischerweise zusätzlich durch ein Abstreifblech kontrolliert wird.

Kommen im erfindungsgemäßen Prozess Walzen zum Einsatz, dann können diese beispielsweise die Funktion einer Dosierwalze, einer Übertragungswalze, oder einer Gegendruckwalze (Presseurwalze) übernehmen. Walzen unterschiedlicher Art in Bezug auf Mantelmaterial und Oberflächenbeschaffenheit können dabei vorteilhaft verwendet werden. Beispiele erfindungsgemäß einsetzbarer Walzen sind Stahlwalzen, insbesondere hochveredelte oder verchromte, Walzen mit Oberflächen anderer Metalle, Hartgusswalzen, Keramikwalzen und Gummiwalzen (Elastomerwalzen). Die in Gummiwalzen zum Einsatz kommenden Elastomere können beispielsweise auf EPDM, Polyurethan (PU), Nitrilbutadienkautschuk (NBR) oder Silikonkautschuk basieren. Walzen können außerdem antiadhäsiv durch Silikon- oder PTFE-Beschichtung ausgerüstet sein. Glattwalzen sind ebenso einsetzbar wie Rasterwalzen, die Laser-graviert oder geätzt sein und verschiedene Gravurmuster wie Vierkant, Hexagonal oder Haschurenmuster aufweisen können. Optional können temperierbare Walzen verwendet werden, also solche, die gekühlt oder beheizt werden können. Walzen können angetrieben oder frei mitlaufend verwendet werden, synchron laufen sowie sich in Bahnrichtung oder entgegen der Bahnrichtung drehen. Walzenpaare, also Kombinationen aus zwei Walzen, die gemeinsam einen Walzenspalt bilden, können im Gleichlauf oder Gegenlauf gefahren werden, wobei die Drehgeschwindigkeit der beiden Walzen gleich oder verschieden sein kann. Die Durchmesser der Walzen können ebenfalls gleich oder verschieden gewählt werden. Weitere Prozesselemente, die im Beschichtungsschritt erfindungsgemäß eingesetzt werden können, umfassen beispielsweise Streichmesser, Luftmesser und Abstreifbleche. Bevorzugt wird zumindest eine Rasterwalze im Beschichtungsschritt eingesetzt.

Das erfindungsgemäße Verfahren zur Herstellung vielseitig einsetzbarer Kunststoffprodukte umfasst zudem einen Schritt, bei dem das beschichtete bevorzugt folienförmige Material mit einer Eindeckschicht (z.B. einer Folie) eingedeckt wird. Zur erfindungsgemäßen Eindeckung der beschichteten Lackschicht mit der erfindungsgemäß verwendeten Schicht können beliebige dem Fachmann bekannte Verfahren zum Einsatz kommen. Insbesondere bieten sich alle solche Verfahren an, die beispielsweise aus der Verwendung von Kaschierfolien bekannt sind. H. Klein stellt einige Kaschierverfahren zusammen, die im Prinzip im Sinne dieser Erfindung eingesetzt werden können [H. Klein, Coating, 1996, 29, 246]. Vorteilhaft wird zu einem mit einer Lackbeschichtung versehenen folienförmigen Material mit gleicher Geschwindigkeit eine Eindeckfolie zugeschossen, die durch Verwendung einer Andruckwalze mit dem beschichteten folienförmigen Material in Kontakt gebracht wird. Sehr bevorzugt weist die Andruckwalze eine glatte Oberfläche auf. Es wird vorteilhafterweise mit einem Liniendruck der Andruckwalze gearbeitet. Sehr bevorzugt ist der Andruck gerade so gering, dass etwaige Lufteinschlüsse aus dem Verbund gerade herausgedrückt werden. Werden solche geringen Andrücke gewünscht, dann können zur Eindeckung der Lackschicht vorteilhaft Gummiwalzen oder andere dem Fachmann bekannte Walzenarten oder andersgestaltete Vorrichtungen eingesetzt werden.

Kommen im Eindeckprozess Walzenpaare bestehend aus Andruckwalze und Unterwalze zum Einsatz, dann können die Durchmesser der beiden Walzen gleich oder verschieden sein und die Oberflächenbeschaffenheit beispielsweise im Hinblick auf Material und/oder Struktur ebenfalls gleich oder verschieden sein. Die Andruckwalze kann angetrieben werden oder aber frei mitlaufend im Prozess implementiert sein. Bevorzugt laufen Andruckwalze und Unterwalze mit gleicher Winkelgeschwindigkeit.

Im Gegensatz zu typischen Kaschierverfahren, in denen Verbundfolien hergestellt werden, ist die Eindeckfolie im Sinne dieser Erfindung so ausgewählt, dass sie sich nach der Eindeckung und der Aushärtung der Lackschicht von dieser zerstörungsfrei und rückstandslos wieder ablösen lässt.

Erfindungsgemäß einsetzbare Eindeckfolien zeichnen sich durch ihre hohe Oberflächenglätte zumindest auf der zum Lack weisenden Seite, durch hohe Transparenz im für die Bestrahlung im zumindest einen Aushärtungsschritt relevanten Wellenlängenbereich sowie durch zerstörungsfreie und rückstandslose Wiederablösbarkeit von der nach der Bestrahlung ausgehärteten Lackschicht aus.

Eine Eindeckfolie ist dann erfindungsgemäß einsetzbar, wenn ihre zumindest zur Lack weisende Seite eine Oberflächenrauhigkeit ermittelt nach Test D einen Rz-Wert von höchstens 0,3 µm, bevorzugt von höchstens 0,15 µm, sehr bevorzugt von höchstens 0,08 µm aufweist.

In einer speziellen Erfindungsauslegung, nämlich wenn mit UV-Strahlung ausgehärtet wird, ist die Eindeckfolie dann erfindungsgemäß, wenn sie bei einer eingestrahlten Wellenlänge von 400 nm eine Transparenz nach Test E von mindestens 80 %, sehr bevorzugt von mindestens 85 % aufweist. Kommen Elektronenstrahlen zur Härtung der zumindest einen Lackschicht zum Einsatz, dann braucht die Folie bei einer Wellenlänge von 400 nm wie auch im sichtbaren Bereich nicht transparent zu sein.

Die erfindungsgemäßen Eindeckfolien weisen Haze-Werte nach Test F von höchstens 5 %, bevorzugt von höchstens 2,5 %, sehr bevorzugt von höchstens 1 % auf.

Erfindungsgemäße Eindeckfolien weisen bevorzugt eine Schichtdicke einschließlich 5 µm und einschließlich 150 µm, bevorzugt zwischen einschließlich 15 µm und einschließlich 100 µm auf.

Vorteilhaft basieren erfindungsgemäße Eindeckfolien auf Polyolefinen. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit. Ferner können Polyvinylacetate eingesetzt werden. Polyvinylacetate können neben Vinylacetat auch Vinylalkohol als Comonomer enthalten, wobei der freie Alkoholanteil in weiten Grenzen variiert werden kann. Außerdem können Polyester als Basismaterial der erfindungsgemäßen Eindeckfolie dienen. In einer besonders bevorzugten Auslegung dieser Erfindung werden Polyester auf Basis von beispielsweise Polyethylenterephthalat (PET) eingesetzt. Zudem können Polymethacrylate zur Herstellung von erfindungsgemäßen Eindeckfolien eingesetzt werden. Hier kann durch die Wahl der Monomere (Methacrylate und z. T. auch Acrylate) die Glasübergangstemperatur der Folie gesteuert werden. Weiterhin können die Polymethacrylate auch Additive enthalten, um z. B. die Flexibilität der Folie zu erhöhen oder die Glasübergangstemperatur herab- oder heraufzusetzen oder die Ausbildung von kristallinen Segmenten zu minimieren. Weitere Materialien, auf denen erfindungsgemäß einsetzbare Eindeckfolien basieren können, umfassen teil- oder perfluorierte Kohlenwasserstoffe polymerer Art. Auch Papiere können zum Einsatz kommen.

Erfindungsgemäße Eindeckfolien können wahlweise insbesondere monoaxial orientiert, biaxial orientiert oder nicht orientiert vorliegen.

Zur Herstellung eines folienförmigen Materials kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern. Als weitere optional einsetzbare Additive können Alterungsschutzmittel, Lichtschutzmittel wie insbesondere UV-Schutzmittel, Antioxidantien, weitere Stabilisatoren, Flammschutzmittel, Pigmente, Farbstoffe und/oder Blähmittel enthalten sein.

Erfindungsgemäße Eindeckfolien können als Einschichtaufbau zum Einsatz kommen oder auch als beispielsweise durch Coextrusion gewonnener mehrschichtiger Verbund oder auch ein Folienlaminat. Ferner können erfindungsgemäße Eindeckfolien auch auf einer und/oder beiden Seiten vorbehandelt und/oder mit einer funktionellen Schicht versehen sein. Sind beide Seiten vorbehandelt und/oder beschichtet, dann kann die Art und/oder Ausprägung der Vorbehandlung und/oder Beschichtung unterschiedlich oder gleich sein. Eine solche Vorbehandlung und/oder Beschichtung kann beispielsweise zu einer verbesserten Wiederablösbarkeit von der zumindest einen ausgehärteten Lackschicht führen. Zu diesem Zweck ist es besonders vorteilhaft, wenn die zum Lack zeigende Seite eine Beschichtung trägt, die auf Polysiloxanen, teil- oder perfluorierten Kohlenstoffverbindungen polymerer Art oder auf Polyolefinen wie insbesondere Polyethylen, basieren, und/oder durch eine Corona-Behandlung und/oder eine Beflammung und/oder eine Plasmabehandlung und/oder weitere Methoden zur Oberflächenvorbehandlung modifiziert werden.

Die erfindungsgemäßen Eindeckschichten sind bevorzugt zumindest auf der zur Lackschicht weisenden Seite frei von Antiblockmitteln anorganischer und/oder partikulärer Art wie beispielsweise Silikaten oder Talkum.

Das erfindungsgemäße Verfahren zur Herstellung der vielseitig einsetzbaren Kunststoffprodukte umfasst ferner zumindest einen Aushärtungsschritt. Dieser zumindest eine Aushärtungsschritt ist so in das erfindungsgemäße Verfahren integriert, dass er nach der Beschichtung der Lackformulierung, aus der durch Vernetzung die zumindest eine abriebfeste und flexible Lackschicht gewonnen wird, und der Eindeckung mit einer erfindungsgemäßen Eindeckschicht erfolgt. Im Sinne dieser Erfindung kommen zu diesem Zweck bevorzugt strahlenchemische Verfahren zum Einsatz. Diese umfassen die Einwirkung elektromagnetischer Strahlung wie insbesondere der UV-Strahlung und/oder von Partikelstrahlung wie insbesondere der Elektronenstrahlung. Mittels kurzzeitiger Einwirkung von Licht in einem Wellenlängenbereich zwischen 200 bis 500 nm und/oder beschleunigter Elektronen wird das beschichtete Lackmaterial, bestrahlt und damit ausgehärtet. Im Fall der UV-Bestrahlung kommen insbesondere Quecksilber-Hochdruck- oder -Mitteldruck-Lampen bei einer Leistung von 80 bis 240 W/cm zum Einsatz. Weitere Strahlungsquellen, die im Sinne dieser Erfindung einsetzbar sind, sind dem Fachmann geläufig. Wahlweise wird das Emissionsspektrum der Lampe auf den eingesetzten Photoinitiator abgestimmt oder die Art des Photoinitiators an das Lampenspektrum angepasst. Die Bestrahlungsintensität wird der jeweiligen Quantenausbeute des UV-Photoinitiators und der Bahngeschwindigkeit angepasst.

Kommt zur Aushärtung der Lackschicht die Bestrahlung mit beschleunigten Elektronen zum Einsatz, was auch in Kombination mit einer UV-Vernetzung geschehen kann, dann umfassen typische Bestrahlungsvorrichtungen Linearkathodensysteme, Scannersysteme bzw. Segmentkathodensysteme, sofern es sich um Elektronenstrahlbeschleuniger handelt. Typische Beschleunigungsspannungen liegen im Bereich zwischen 50 kV und 1 MV, vorzugsweise 80 kV und 300 kV. Die angewandten Bestrahlungsdosen liegen zwischen 5 bis 250 kGy, insbesondere zwischen 20 und 100 kGy.

Bevorzugt werden mit dem erfindungsgemäßen Verfahren einseitig selbstklebende Produkte hergestellt, die zumindest eine Haftklebemassenschicht enthalten. Diese zumindest eine Haftklebemassenschicht besteht aus einer beliebigen Haftklebemasse nach dem Stand der Technik (siehe hierzu beispielsweise D. Satas (Hrsg.), Handbook of Pressure Sensitive Adhesive Technology, 2. Aufl., 1989, Van Nostrand Reinhold, New York), insbesondere auf Basis von Acrylat-, Naturkautschuk-, Synthesekautschuk- oder Ethylenvinylacetat. Auch Kombinationen dieser und weiterer Systeme sind erfindungsgemäß. Sehr bevorzugt kommen Haftklebemassen auf Basis von Acrylatcopolymeren zum Einsatz.

Beispiele für erfindungsgemäß einsetzbare Haftklebemassen sind alle linearen, sternförmigen, verzweigten, gepfropften oder andersartig gestalteten Polymere, bevorzugt Homopolymere, statistische Copolymere oder Blockcopolymere. Als Beispiele, aber ohne eine Einschränkung vornehmen zu wollen, seien als besonders vorteilhaft im Sinne dieser Erfindung statistische Copolymere ausgehend von α,β-ungesättigten Estern und/oder ausgehend von Alkylvinylethern genannt. Besonders bevorzugt werden α,β-ungesättigte Alkylester der allgemeinen Struktur

CH₂=CH(R¹)(COOR²) (I)

verwendet, wobei R¹ = H oder CH₃ und R² = H oder lineare, verzweigte oder ringförmige, gesättigte oder ungesättigte Alkylreste mit 1 bis 30 C-Atomen darstellt.

Monomere, die sehr bevorzugt im Sinne der allgemeinen Struktur (I) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Hexadecylacrylat, Stearylacrylat, Stearylmethacrylat, Behenylacrylat deren verzweigte Isomere, wie z. B. 2-Ethylhexylacrylat, iso-Octylacrylat, iso-Decylacrylat und Tridecylacrylat sowie cyclische Monomere wie z. B. Cyclohexylacrylat, Tetrahydrofurfurylacrylat, Dihydrodicyclopentadienylacrylat, 4-tert-Butylcyclohexylacrylat, Norbornylacrylat und Isobornylacrylat.

Ebenfalls einsetzbar als Monomere sind Acryl- und Methacrylsäureester, die aromatische Reste enthalten, wie z. B. Phenylacrylat, Benzylacrylat, Phenylmethacrylat, Benzylmethacrylat, Phenoxyethylacrylat, ethoxyliertes Phenolacrylat oder ethoxyliertes Nonylphenolacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen oder Heterozyklen in α-Stellung enthalten. Für die optional einsetzbaren Vinylmonomere seien beispielhaft ausgewählte erfindungsgemäß einsetzbare Monomere genannt: Vinylacetat, Vinylcaprolactam, Vinylformamid, Vinylpyridin, Ethylvinylether, 2-Ethylhexylvinylether, Butylvinylether, Vinylchlorid, Vinylidenchlorid, Acrylnitril, Styrol und α-Methylstyrol.

Weitere erfindungsgemäß einsetzbare Monomere sind Glycidylmethacrylat, Glycidylacrylat, Allylglycidylether, 2-Hydroxyethylmethacrylat, 2-Hydroxyethylacrylat, 3-Hydroxypropylmethacrylat, 3-Hydroxypropylacrylat, 4-Hydroxybutylmethacrylat, 4-Hydroxybutylacrylat, Acryloylmorpholin, Methacryloylmorpholin, Trimethylolpropanformalmonoacrylat, propoxyliertes Neopentylmethylethermonoacrylat, Tripropylenglykolmethylethermonoacrylat, ethoxyliertes Ethylacrylat wie Ethyldiglykolacrylat, propoxyliertes Propylacrylat, Acrylsäure, Methacrylsäure, Itaconsäure und deren Ester, Crotonsäure und deren Ester, Maleinsäure und deren Ester, Fumarsäure und deren Ester, Maleinsäureanhydrid, Methacrylamid sowie N-alkylierte Derivate wie N-Methylolmethacrylamid, Acrylamid sowie N-alkylierte Derivate wie N-Methylolacrylamid, Vinylalkohol, 2-Hydroxyethylvinylether, 3-Hydroxypropylvinylether und 4-Hydroxybutylvinylether.

Bei Kautschuk oder Synthesekautschuk als Ausgangsmaterial für die Haftklebemasse in der optional einsetzbaren zumindest einen Haftklebemassenschicht sind weitere Variationsmöglichkeiten gegeben, sei er aus der Gruppe der Naturkautschuke oder der Synthesekautschuke oder sei er aus einem beliebigen Verschnitt aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke, der Butadien-Kautschuke, der synthetischen Polyisoprene, der Butyl-Kautschuke, der halogenierten Butyl-Kautschuke, der Acrylat-Kautschuke, der Ethylenvinylacetat-Copolymere und der Polyurethane und/oder deren Verschnitten gewählt werden können.

Als in der zumindest einen Haftklebemassenschicht optional einsetzbare klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen.

Als ebenfalls optional einsetzbare Weichmacher können alle aus der Selbstklebebandtechnologie bekannten weichmachenden Substanzen eingesetzt werden. Dazu zählen unter anderem die paraffinischen und naphthenischen Öle, (funktionalisierte) Oligomere wie Oligobutadiene und -isoprene, flüssige Nitrilkautschuke, flüssige Terpenharze, pflanzliche und tierische Fette und Öle, Phthalate und funktionalisierte Acrylate. Haftklebemassen, wie sie oben angegeben sind, können zudem weitere Bestandteile wie rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, Füllstoffe und/oder Blähmittel enthalten.

Die zumindest eine optionale Haftklebmassenschicht weist typischerweise ein Flächengewicht von zwischen einschließlich 2 g/m² und einschließlich 500 g/m², bevorzugt zwischen einschließlich 5 g/m² und einschließlich 100 g/m² auf.

Die erfindungsgemäß hergestellten Produkte enthalten bevorzugt zumindest eine Trägerfolie. Diese zumindest eine Trägerfolie kann aus prinzipiell allen filmbildenden und extrusionsfähigen Polymeren gewonnen worden sein. Siehe hierzu beispielsweise die Zusammenstellung von Nentwig [J. Nentwig, Kunststofffolien, Kapitel 5, 2. Aufl., 2000, C. Hanser, München, S. 97ff]. Vorteilhaft basieren solche bevorzugten Trägerfolien auf Polyolefinen. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit.

Ferner können Polyvinylacetate eingesetzt werden. Polyvinylacetate können neben Vinylacetat auch Vinylalkohol als Comonomer enthalten, wobei der freie Alkoholanteil in weiten Grenzen variiert werden kann. Außerdem können Polyester als Basismaterial der zumindest einen Trägerfolie dienen. In einer besonders bevorzugten Auslegung dieser Erfindung werden Polyester auf Basis von beispielsweise Polyethylenterephthalat (PET) eingesetzt. Ferner können Polyvinylchloride (PVC) als Foliengrundmaterial eingesetzt werden. Zur Steigerung der Temperaturstabilität können die in diesen Folien enthaltenen Polymerbestandteile unter Verwendung versteifender Comonomere hergestellt werden. Weiterhin können die Folien strahlenvernetzt werden, um eine ebensolche Eigenschaftsverbesserung zu erhalten. Kommt PVC als Folienrohstoff zum Einsatz, kann es optional plastifizierende Komponenten enthalten (Weichmacher). Außerdem können Polyamide zur Herstellung von Folien eingesetzt werden. Die Polyamide können aus einer Dicarbonsäure und einem Diamin oder aus mehreren Dicarbonsäuren und Diaminen bestehen. Neben Dicarbonsäuren und Diaminen lassen sich auch höher funktionelle Carbonsäuren und Amine auch in Kombination mit den oben genannten Dicarbonsäuren und Diaminen einsetzen. Zur Versteifung der Folie werden bevorzugt zyklische, aromatische oder heteroaromatische Ausgangsmonomere eingesetzt. Zudem können Polymethacrylate zur Herstellung von Folien eingesetzt werden. Hier kann durch die Wahl der Monomere (Methacrylate und z. T. auch Acrylate) die Glasübergangstemperatur der Folie gesteuert werden. Weiterhin können die Polymethacrylate auch Additive enthalten, um z. B. die Flexibilität der Folie zu erhöhen oder die Glasübergangstemperatur herab- oder heraufzusetzen oder die Ausbildung von kristallinen Segmenten zu minimieren. Zudem können Polycarbonate zur Herstellung von Folien eingesetzt werden. Ferner können auf Vinylaromaten und Vinylheteroaromaten basierende Polymere und Copolymere zur Herstellung der zumindest einen Trägerfolie B eingesetzt werden.

Die zumindest eine Trägerfolie kann wahlweise insbesondere monoaxial orientiert, biaxial orientiert oder nicht orientiert vorliegen.

Zur Herstellung eines folienförmigen Materials kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern. Als weitere optional einsetzbare Additive können Alterungsschutzmittel, Lichtschutzmittel wie insbesondere UV-Schutzmittel, Antioxidantien, weitere Stabilisatoren, Flammschutzmittel, Pigmente, Farbstoffe und/oder Blähmittel enthalten sein.

Die zumindest eine Trägerfolie kann selbst als Einschichtaufbau zum Einsatz kommen, oder auch als mehrschichtiger Verbund, der beispielsweise durch Coextrusion gewonnen wurde. Ferner kann die Trägerfolie auch auf einer und/oder beiden Seiten vorbehandelt und/oder mit einer funktionellen Schicht versehen sein. Sind beide Seiten vorbehandelt und/oder beschichtet, dann kann die Art und/oder Ausprägung der Vorbehandlung und/oder Beschichtung unterschiedlich oder gleich sein. Eine solche Vorbehandlung und/oder Beschichtung kann beispielsweise zu einer verbesserten Verankerung einer weiteren Schicht dienen wie beispielsweise der zumindest einen Haftklebemassenschicht oder der zumindest einen Lackschicht oder anderer optional einsetzbarer Schichten. Zu diesem Zweck ist es besonders vorteilhaft, wenn eine oder beide Seiten der Trägerfolie mit einer oder verschiedenen Sorten an Primern und/oder wenn eine oder beide Seiten der Trägerfolie durch eine Corona-Behandlung und/oder eine Beflammung und/oder eine Plasmabehandlung und/oder weitere Methoden zur Oberflächenaktivierung vorbehandelt werden.

Die zumindest eine Schicht eines Trägermaterials weist typischerweise eine Schichtdicke zwischen einschließlich 5 µm und einschließlich 500 µm, bevorzugt zwischen einschließlich 10 µm und einschließlich 100 µm auf.

Die erfindungsgemäßen Verfahren beinhalten die Beschichtung und Aushärtung von bevorzugt strahlenhärtbarer Formulierungen, aus denen die zumindest eine abriebfeste und flexible Lackschicht gewonnen wird. Solche Lackformulierungen enthalten bevorzugt zumindest eine Verbindung, die zumindest eine (Meth)acrylat-Funktion, bevorzugt zumindest zwei (Meth)acrylat-Funktionen trägt, sowie bevorzugt zumindest eine Verbindung, die zumindest zwei (Meth)acrylat-Funktionen, bevorzugt drei (Meth)acrylat-Funktionen trägt. Weitere Verbindungen mit zumindest einer (Meth)acrylat-Funktion bevorzugt höherer (Meth)acrylat-Funktionalität einzusetzen, ist im Sinne dieser Erfindung vorteilhaft.

Kommen Verbindungen zum Einsatz, die lediglich eine (Meth)acrylat-Funktion tragen, werden im Sinne dieser Erfindung bevorzugt (Meth)acrylat-Monomere eingesetzt, die bereits als Monomere für Haftklebemassen der zumindest einen Haftklebemassenschicht genannt wurden, und insbesondere solche, die der allgemeinen Strukturformel (I) entsprechen. Weiterhin können aliphatische oder aromatische insbesondere ethoxylierte oder propoxylierte Polyethermono(meth)acrylate, aliphatische oder aromatische Polyestermono(meth)acrylate, aliphatische oder aromatische Urethanmono(meth)acrylate oder aliphatische oder aromatische Epoxymono(meth)acrylate als Verbindungen, die eine (Meth)acrylat-Funktion tragen, eingesetzt werden.

Bevorzugt werden als Verbindungen, die zumindest zwei (Meth)acrylat-Funktionen tragen, eine oder mehrere Verbindungen aus der Liste umfassend difunktionelle aliphatische (Meth)acrylate wie 1,4-Butandioldi(meth)acrylat, 1,6-Hexandioldi(meth)acrylat, Dipropylenglykoldi(meth)acrylat, Tricyclodecandimethyloldi(meth)acrylat, trifunktionelle aliphatische (Meth)acrylate wie Trimethylolpropantri(meth)acrylat, tetrafunktionelle aliphatische (Meth)acrylate wie Ditrimethylolpropantetra(meth)acrylat, pentafunktionelle aliphatische (Meth)acrylate wie Dipentaerythritolmonohydroxypenta(meth)acrylat, hexafunktionelle aliphatische (Meth)acrylate wie Dipentaerythritolhexa(meth)acrylat eingesetzt. Ferner, wenn höherfunktionalisierte Verbindungen eingesetzt werden, können aliphatische oder aromatische insbesondere ethoxylierte und propoxylierte Polyether(meth)acrylate mit insbesondere zwei, drei, vier oder sechs (Meth)acrylat-Funktionen wie ethoxyliertes Bisphenol A Di(meth)acrylat, Polyethylenglykoldi(meth)acrylat, propoxyliertes Trimethylolpropantri(meth)acrylat, propoxyliertes Glyceroltri(meth)acrylat, propoxyliertes Neopentylglyceroldi(meth)acrylat, ethoxyliertes Trimethylolpropantri(meth)acrylat, ethoxyliertes Trimethylolpropandi(meth)acrylat, ethoxyliertes Trimethylolpropantri(meth)acrylat, Tetraethylenglykoldi(meth)acrylat, ethoxyliertes Neopentylglykoldi(meth)acrylat, propoxyliertes Pentaerythritoltri(meth)acrylat, Dipropylenglykoldi(meth)acrylat, ethoxyliertes Trimethylolpropanmethyletherdi(meth)acrylat, aliphatische oder aromatische Polyester(meth)acrylate mit insbesondere zwei, drei, vier oder sechs (Meth)acrylat-Funktionen, aliphatische oder aromatische Urethan(meth)acrylate mit insbesondere zwei, drei, vier oder sechs (Meth)acrylat-Funktionen, aliphatische oder aromatische Epoxy(meth)acrylate mit insbesondere zwei, drei, vier oder sechs (Meth)acrylat-Funktionen genutzt werden. Ferner können mehrfach ungesättigte Vinylether vorteilhaft zum Einsatz kommen.

Die erfindungsgemäßen Verfahren können zudem vorteilhaft eingesetzt werden, um Lackformulierungen zu beschichten und auszuhärten, die zumindest eine Sorte an anorganischen Oxiden in partikulärer Form enthalten. Die Oberfläche dieser Partikel ist bevorzugt derartig funktionalisiert, dass die Partikel nicht nur eine stabile Suspension in der durch das Lackharzgemisch gebildeten organischen Matrix bilden, sondern auch während des Aushärtungsvorgangs mit dem sich bildenden organischen Netzwerk chemisch verknüpft werden können. Besonders vorteilhaft ist es, wenn eine derartige Oberflächenfunktionalisierung durch Umsetzung der Partikel mit Kopplungsreagenzien wie insbesondere ungesättigten Silanen oder Titanaten erfolgt. Siehe hierzu beispielsweise L. N. Lewis, D. Katsamberis, J. Appl. Polym. Sci., 1991, 42, 1551, EP 1 366 112 B1 der Hansechemie oder US 6,136,912 der Clariant SA. Besonders vorteilhaft sind in solchen Formulierungen amorphe Kieselsäuren oder Korund enthalten, deren mittlerer Partikeldurchmesser typischerweise unter 100 nm liegt. Vorteilhafte Partikelgehalte liegen bei bis zu 50 Gew.-%, bevorzugt bei bis zu 30 Gew.-%.

Rohstoffe, die vorteilhaft im Sinne dieser Erfindung eingesetzt werden können, sind zum Beispiel unter den Markennamen Highlink® von der Firma Clariant (C. Vu, O. LaFerte, A. Eranian, Eur. Coat. J., 2002, 1-2, 64) und Nanocryl® von der Firma Hansechemie (C. Roscher, Eur. Coat. J., 2003, 4, 38) erhältlich.

Vorteilhaft enthalten erfindungsgemäße Formulierungen, aus denen die zumindest eine abriebfeste und flexible Lackschicht erzeugt wird, bis zu einem Anteil von 50 Gew.-% Polymere, die eine Molmasse von mindestens 5000 g/mol aufweisen. Kommen solche Materialien zum Einsatz, dann liegen sie in einer vorteilhaften Erfindungsauslegung im Wesentlichen frei von reaktiven Gruppen wie insbesondere C-C-Doppelbindungen vor. In einer weiteren vorteilhaften Auslegung tragen solche Polymere funktionelle Gruppen, wie zum Beispiel (Meth)acryloyl-Gruppen, die an der Aushärtungsreaktion teilnehmen können. Als Polymere bieten sich insbesondere (Meth)acrylat-Copolymere an aber auch andere gesättigter oder ungesättigter Art (siehe z. B. P. K. T. Oldring (Hrsg.), Chemistry & Technology of UV & EB Formulations for Coatings, Inks & Paints, Bd. 2, 1991, SITA, London, S. 158 - 184]. Polymere sind dann vorteilhaft einsetzbar, wenn sie im Gemisch der übrigen Lackharzkomponenten löslich sind.

Die erfindungsgemäßen Verfahren können zudem vorteilhaft eingesetzt werden, um Lackformulierungen zu beschichten und auszuhärten, die zudem optional aber vorteilhafterweise weitere Bestandteile wie Katalysatoren, Beschleuniger, Lichtschutzmittel wie insbesondere UV-Schutzmittel, Alterungsschutzmittel, Antioxidantien, weitere Stabilisatoren, Flammschutzmittel, Verlaufsmittel, Benetzungsmittel, Gleitmittel, Entschäumer, Entlüfter, Haftvermittler, weitere rheologisch wirksame Additive wie beispielsweise Thixotropiermittel, Mattierungsmittel und/oder weitere Füllstoffe enthalten.

In einer speziellen Erfindungsauslegung sind die erfindungsgemäßen Formulierungen, aus der die zumindest eine abriebfeste und flexible Lackschicht gewonnen wird, frei von silikonhaltigen Additiven.

Kommen solche Auslegungen dieser Erfindung zum Einsatz, bei denen die Lackformulierung nach der Beschichtung durch elektromagnetische Strahlung und hier insbesondere durch UV-Strahlung gehärtet wird, dann wird der Lackformulierung zumindest eine Sorte eines Photoinitiators zugesetzt.

Geeignete Vertreter solcher Photoinitiatoren sind Typ-I-Photoinitiatoren, also sogenannte α-Spalter wie Benzoin- und Acetophenon-Derivate, Benzilketale oder Acylphosphinoxide, Typ-II-Photoinitiatoren, also sogenannte Wasserstoffabstraktoren wie Benzophenon-Derivate und einige Chinone, Diketone und Thioxanthone. Ferner können TriazinDerivate zur Initiierung radikalischer Reaktionen verwendet werden.

Vorteilhaft einsetzbare Photoinitiatoren vom Typ I umfassen beispielsweise Benzoin, Benzoinether wie beispielsweise Benzoinmethylether, Benzoin-iso-propylether, Benzoinbutylether, Benzoin-iso-butylether, Methylolbenzoin-Derivate wie Methylolbenzoinpropylether, 4-Benzoyl-1,3-dioxolan und seine Derivate, Benzilketal-Derivate wie 2,2-Dimethoxy-2-phenylacetophenon oder 2-Benzoyl-2-phenyl-1,3-dioxolan, a,a-Dialkoxyacetophenone wie α,α-Dimethoxyacetophenon und α,α-Diethoxyacetophenon, α-Hydroxyalkylphenone wie 1-Hydroxycyclohexylphenylketon, 2-Hydroxy-2-methyl-1-phenylpropanon und 2-Hydroxy-2-methyl-1-(4-iso-propylphenyl)-propanon, 4-(2-Hydroxyethoxy)-phenyl-2-hydroxy-2-methyl-2-propanon und seine Derivate, α-Aminoalkylphenone wie 2-Methyl-1-[4-(methylthio)-phenyl]-2-morpholinopropan-2-on und 2-Benzyl-2-dimethylamino-1-(4-morpholinophenyl)-butan-1-on, Acylphosphinoxide wie 2,4,6-Trimethylbenzoyldiphenylphosphinoxid und Ethyl-2,4,6-trimethylbenzoylphenylphosphinat und O-Acyl-α-oximinoketone.

Vorteilhaft einsetzbare Photoinitiatoren vom Typ II umfassen beispielsweise Benzophenon und seine Derivate wie 2,4,6-Trimethylbenzophenon oder 4,4'-Bis-(dimethylamino)-benzophenon, Thioxanthon und seine Derivate wie 2-iso-Propylthioxanthon und 2,4-Diethylthioxanthon, Xanthon und seine Derivate und Anthrachinon und seine Derivate.

Typ-II-Photoinitiatoren werden besonders vorteilhaft in Kombination mit stickstoffhaltigen Coinitiatoren, den sogenannten Amin-Synergisten eingesetzt. Bevorzugt werden im Sinne dieser Erfindung tertiäre Amine verwendet. Ferner kommen in Kombination mit Typ-II-Photoinitiatoren vorteilhaft Wasserstoffatomdonoren zur Anwendung. Beispiele hierfür sind Substrate, die Amino-Gruppen enthalten. Beispiele für Amin-Synergisten sind Methyldiethanolamin, Triethanolamin, Ethyl-4-(dimethylamino)-benzoat, 2-n-Butoxyethyl-4-(dimethylamino)-benzoat, iso-Octyl-4-(dimethylamino)-benzoat, 2-(Dimethylaminophenyl)-ethanon sowie ungesättigte und damit copolymerisierbare tertiäre Amine, (meth)acrylierte Amine, ungesättigte Amin-modifizierte Oligomere und Polymere auf Polyester- oder Polyetherbasis und Amin-modifizierte (Meth)acrylate.

Es können außerdem polymerisierbare Photoinitiatoren vom Typ I und/oder Typ II eingesetzt werden.

Im Sinne dieser Erfindung können auch beliebige Kombinationen verschiedener Arten von Typ-I und/oder Typ-II Photoinitiatoren eingesetzt werden.

Die erfindungsgemäßen Produkte weisen zumindest eine abriebfeste und flexible Lackschicht nach der erfindungsgemäßen Beschichtung und Aushärtung auf, die ein bevorzugtes Flächengewicht zwischen einschließlich 0,5 g/m² und einschließlich 50 g/m², bevorzugt zwischen einschließlich 2 g/m² und einschließlich 15 g/m² hat.

Bevorzugt weist die zumindest eine abriebfeste und flexible Lackschicht eine Härte bestimmt nach Test B von mindestens 4H, bevorzugt von mindestens 7H auf und eine Flexibilität, so dass sie Test C besteht.

Die zumindest eine abriebfeste und flexible Lackschicht, weist bevorzugt eine außerordentlich geringe Oberflächenrauhigkeit auf. Erfindungsgemäße Lackschichten zeigen eine Oberflächenrauhigkeit nach Test D, gegeben durch den Rz-Wert, von höchstens 0,3 µm, bevorzugt von höchstens 0,15 µm, sehr bevorzugt von höchstens 0,08 µm. Die zumindest eine abriebfeste und flexible Lackschicht zeichnet sich gleichsam durch besonders hohe optische Qualität aus. So ist die zumindest eine abriebfeste und flexible Lackschicht bevorzugt transparent. In dieser Erfindungsauslegung weist sie eine Transmission bei 400 nm, 600 nm und 800 nm von mindestens 85 %, bevorzugt von mindestens 90 %, sehr bevorzugt von mindestens 92 % nach Test E auf.

Außerdem zeigen die Produkte eine zumindest abriebfeste und flexible Lackschicht C mit einer besonders geringen Trübung, gegeben durch einen Haze-Wert bestimmt nach Test F von höchstens 5 %, bevorzugt von höchstens 2,5 %, sehr bevorzugt von höchstens 1 %.

Die über die erfindungsgemäßen Verfahren hergestellten bevorzugt selbstklebenden Produkte enthalten zumindest eine optionale Haftklebemassenschicht, zumindest eine Trägerfolie und zumindest eine abriebfeste und flexible Lackschicht können in beliebiger zeitlicher Reihenfolge in den Verbund eingebracht werden. Es sind beispielsweise solche Verfahren erfindungsgemäß, bei denen ein Vormaterial, das zumindest die eine Trägerfolie enthält, mit der zumindest einen optionalen Haftklebemasseschicht beschichtet wird. Dies kann auch durch eine Umkaschierung der auf einem Trennmaterial befindlichen Haftklebemassenschicht erfolgen. Danach wird dann die Formulierung, aus der die zumindest eine Lackschicht durch Aushärtung erhalten wird, auf das bereits mit der zumindest einen optionalen Haftklebemassenschicht versehene Vormaterial beschichtet. Es ist weiterhin auch möglich, dass beispielsweise erst ein Vormaterial, das zumindest die eine Trägerfolie enthält, mit der Formulierung, aus der die zumindest eine Lackschicht durch Aushärtung erhalten wird, beschichtet wird. Im Anschluss daran wird das bereits mit der Lackschicht versehene Vormaterial mit der zumindest einen optionalen Haftklebemasse versehen. Dies kann durch Beschichtung einer Haftklebemasse oder durch Zukaschieren eines fertigen Haftklebemassenfilms geschehen.

Zwischen den Schichten der zumindest einen optionalen Haftklebemassenschicht und der zumindest einen Trägerfolie können beliebig viele weitere Schichten gleicher oder verschiedener Art zum Einsatz kommen. Ebenso können auch zwischen der zumindest einen abriebfesten und flexiblen Lackschicht und der zumindest einen Trägerfolie beliebig viele weitere Schichten gleicher oder verschiedener Art zum Einsatz kommen. Als Beispiele für solche weiteren Schichten seien Kaschierkleberschichten, weitere Trägerfolien, geschäumte Schichten, Barriereschichten, Primerschichten und/oder Schichten, mittels derer selbst und/oder in Kombination mit weiteren Schichten Licht reflektiert werden kann, genannt, ohne sich durch diese Aufzählung einschränken zu wollen. Solche optional einsetzbaren Schichten können ebenfalls in beliebiger zeitlicher Reihenfolge, sofern es der Produktaufbau gestattet, in den Verbund eingebracht werden.

Die erfindungsgemäßen bevorzugt einseitig selbstklebenden Produkte werden bevorzugt auf der Seite der zumindest einen Haftklebemassenschicht mit einer Trennfolie oder einem Trennpapier versehen, das vor der Applikation des Produkts auf dem gewünschten Substrat entfernt wird.

Die Eindeckfolie kann zu einem beliebigen Zeitpunkt nach dem zumindest einen Aushärtungsschritt ausgedeckt werden. Dies erfolgt in einer bevorzugten Auslegung dieser Erfindung vor der Aufwicklung des beschichteten folienförmigen Substrats. Eine Konfektionierung der Folienbahn kann inline oder nach Aufwickelung zu Ballenware erfolgen. Sie kann nach verschiedenen Methoden erfolgen. Beispiele hierfür umfassen Schneidprozesse und Stanzprozesse, über die beispielsweise einseitig selbstklebende Bänder, Folien oder Etiketten erhalten werden.

Bevorzugt werden so optisch hochwertige einseitig selbstklebende Produkte hergestellt, die auf der nicht selbstklebend ausgerüsteten Seite eine abriebfeste und flexible Schicht tragen und die über die erfindungsgemäßen Verfahren hergestellt wurden. Sie lassen sich beispielsweise je nach Auslegungsform vorteilhaft als Selbstklebebänder, Selbstklebefolien oder Selbstklebeetiketten zu dekorativen Zwecken, als Oberflächenschutz oder als informationstragende Objekte einsetzen.

Über das erfindungsgemäße Verfahren hergestellte Produkte, die zu Dekorationszwecken eingesetzt werden, enthalten dekorative Elemente beispielsweise aber bevorzugt in Form einer Bedruckung, die sich auf einer beliebigen Schicht des erfindungsgemäßen Verbundmaterials unterhalb der zumindest einen abriebfesten und flexiblen Lackschicht befindet. Dekorative Elemente können beispielsweise Muster beliebiger Art sein. Zudem ist es im Sinne dieser Erfindung möglich, dass zumindest eine beliebige Schicht des erfindungsgemäßen Verbundmaterials weiß, grau, schwarz oder farbig ausgestaltet ist. Ist diese zumindest eine Schicht farbig, dann kann sie zusätzlich wahlweise transparent oder nicht transparent sein. Solche bevorzugt selbstklebenden Produkte kommen bevorzugt als Selbstklebefolien, zugeschnitten zu beliebigen Formen, zum Einsatz, um beliebige Substrate mit der entsprechenden im Produkt enthaltenden Dekoration zu versehen. Ist das Produkt beispielsweise farbig und transparent, dann können mit seiner Hilfe Verglasungen auf einfache Weise farbig gestaltet werden. Die zumindest eine abriebfeste und flexible Lackschicht gewährleistet dann, dass der optische Eindruck wie zum Beispiel der Glanz der Oberfläche, wenn der Lack so eingestellt wurde, über einen längeren Zeitraum auch trotz mechanischer Beanspruchung konserviert bleibt, als es in einem Vergleichsprodukt der Fall wäre, das keine schützende Lackschicht trägt. Ebenso können beliebige Bauelemente sowie Automobilanbauteile oder Teile von Automobilen mit erfindungsgemäßen Folien abgeklebt und damit auf einfache Weise beispielsweise weiß, grau, schwarz oder farbig ausgestaltet werden, wenn das erfindungsgemäße Produkt so ausgelegt ist, dass zumindest eine Schicht des erfinderischen Verbunds weiß, grau, schwarz oder farbig ausgerüstet ist. Durch die zumindest eine optionale Haftklebemassenschicht lässt sich das erfindungsgemäße Produkt leicht auf beliebige Substrate applizieren. Diese Aufzählung kann nur als Beispiel für die erfindungsgemäße Verwendung erfindungsgemäßer Produkte verstanden werden. Eine Vielzahl weiterer Gestaltungsmöglichkeiten und Verwendungen sind ebenfalls möglich.

Über das erfindungsgemäße Verfahren hergestellte Produkte, die Informationen tragen, enthalten diese Informationen beispielsweise aber bevorzugt in Form einer Bedruckung, die sich auf einer beliebigen Schicht des erfindungsgemäßen Verbundmaterials unterhalb der zumindest einen abriebfesten und flexiblen Lackschicht befindet. Informationen können insbesondere beliebige Kombinationen alphanumerischer Zeichen, Balkencodes, Logos und/oder Muster beliebiger Art sein. Weitere Arten von Informationen sind im Sinne dieser Erfindung ebenfalls möglich. Solche selbstklebenden Produkte kommen bevorzugt als Selbstklebeetiketten, zugeschnitten oder gestanzt zu beliebigen Formen, zum Einsatz, um beliebige Substrate mit der entsprechenden im Produkt enthaltenden Information zu versehen. Die zumindest eine abriebfeste und flexible Lackschicht gewährleistet dann, dass die Lesbarkeit der Information über einen längeren Zeitraum auch trotz mechanischer Beanspruchung konserviert bleibt, als es in einem Vergleichsprodukt der Fall wäre, das keine schützende Lackschicht trägt. Durch die zumindest eine optionale Haftklebemasseschicht lässt sich das erfindungsgemäße Produkt leicht auf beliebige Substrate applizieren. Auch die hier genannten Anwendungen informationstragender Produkte sind nur als Beispiele zu verstehen. Eine Vielzahl weiterer Gestaltungsmöglichkeiten und Verwendungen sind ebenfalls möglich.

Über das erfindungsgemäße Verfahren hergestellte Produkte, die die Möglichkeit zur Datenspeicherung bieten, enthalten diese Datenspeichermöglichkeit in oder auf einer beliebigen Schicht des erfindungsgemäßen Verbundmaterials. Eine Datenspeicherung ist insbesondere in Form von Hologrammen möglich, die mit Hilfe eines Lasers in oder auf der entsprechenden Schicht geschrieben und/oder gelesen werden können. Solche Daten können insbesondere beliebige Kombinationen alphanumerischer Zeichen, Balkencodes, Logos und/oder Muster beliebiger Art sein. Weitere Arten von Daten sind im Sinne dieser Erfindung ebenfalls möglich. Daten können ferner in Form von individuellen Hologrammen, individuellen Mikrotexten, individuellen Mikroschriften und/oder individuellen Bildern, wobei die individuellen Hologramme als Dateninhalt neben digitaler Information ebenfalls Mikrotexte, Mikroschriften und/oder Mikrobilder enthalten können, in den einseitig selbstklebenden Produkten gespeichert sein. Solche selbstklebenden Produkte kommen bevorzugt als Selbstklebeetiketten, zugeschnitten oder gestanzt zu beliebigen Formen, zum Einsatz, um beliebige Substrate mit im Produkt enthaltenen Daten und/oder mit der Möglichkeit, Daten in das Produkt zu schreiben, zu versehen. Die zumindest eine abriebfeste und flexible Lackschicht gewährleistet dann, dass die Datenlesbarkeit und/oder Datenschreibbarkeit über einen längeren Zeitraum auch trotz mechanischer Beanspruchung konserviert bleibt, als es in einem Vergleichsprodukt der Fall wäre, das keine schützende Lackschicht trägt. Durch die zumindest eine optionale Haftklebemasseschicht lässt sich das erfindungsgemäße Produkt leicht auf beliebige Substrate applizieren. Auch die hier genannten Anwendungen datentragender Produkte sind nur als Beispiele zu verstehen. Eine Vielzahl weiterer Gestaltungsmöglichkeiten und Verwendungen sind ebenfalls möglich.

### Prüfmethoden

### Test A: Flächengewicht des Lacks

Aus einem beschichteten Muster wurden mittels eines Kreisschneiders fünf Prüfkörper A ausgeschnitten und das Gesamtgewicht durch Wägen bestimmt. Als Referenz wurden aus unbeschichtetem Rohmaterial ebenfalls mittels eines Kreisschneiders fünf Prüfkörper B ausgeschnitten und das Gesamtgewicht durch Wägen bestimmt. Das Flächengewicht des Lacks ist ein Fünftel der Differenz aus dem Gesamtgewicht der fünf Prüfkörper A und dem Gesamtgewicht der fünf Prüfkörper B. Das Flächengewicht wird in g/m² angegeben.

### Test B: Bleistifthärte des Lacks

Die Bleistifthärte des Lacks erfolgte in Anlehnung an ASTM D3363. Ein mit Lack beschichtetes Prüfmuster wird derartig auf einer ebenen, glatten und festen Unterlage platziert, dass der Lack nach oben zeigt. Zur Durchführung des Härtetests wurde ein Satz von Bleistiften unterschiedlicher Härte (9B am weichsten bis 9H am härtesten) der Sorte Derwent Graphic Pencils der Firma Derwent, England, verwendet. Vor jedem Test wurden die einzelnen Bleistifte angespitzt. Die Spitzen wurden anschließende mit einem Sandpapier der Sorte Superflex KJ-RR 16-I P600 der Firma Saint-Gobain Gerva B. V. unter einem Winkel von 90° so abgeflacht, dass eine kreisrunde Fläche am Beginn der Mine entstand. Nacheinander wurden Bleistifte verschiedener Härte unter einem Winkel von 45° vom Prüfer weg über die Testoberfläche gestrichen. Dem Lack wird diejenige Bleistifthärte zugeordnet, die dem härtesten Bleistift entspricht, der im Lack gerade keine sichtbare Kratzspur hinterlassen hat. Wird der Lack vom härtesten Bleistift (9H) nicht geritzt, dann wird als Ergebnis > 9H angegeben.

### Test C: Flexibilität des lackierten Produkts

Ein beschichtetes Muster wird in einem Winkel von 180° um die beiden engbenachbarten Seitenkanten eines flachen, gratfreien Metallbands definierter Dicke gefaltet und geprüft, ob die Lackschicht im Bereich größter Biegung bricht oder abplatzt. Zu diesem Zweck wird ein Horex®-Fühlerlehrenband der Firma Preisser mit einer Stärke von 100 µm verwendet. Das Muster wird so fest um die beiden Kanten gelegt, dass im Kantenbereich keine mit dem Auge sichtbaren Lufteinschlüsse mehr erkennbar sind. Der Lack befindet sich bei dem Test auf der Verbundseite, die nicht zum Fühlerlehrenband zeigt. Widersteht der Lack dieser Beanspruchung, dann wird das Testergebnis mit "bestanden" bezeichnet. Bricht der Lack unter dieser Beanspruchung oder platzt er von einer unteren Lage ab, dann gilt der Test als "nicht bestanden".

*Test D: Oberflächenrauhigkeit der Eindeckfolie und der Lackschicht* C Die Oberflächenrauhigkeit der Eindeckfolie und der ausgehärteten Lackschicht C wird mit einem Perthometer PGK der Fa. Mahr, ausgerüstet mit einer Tastspitze MFW250, bestimmt. Die Muster werden in etwa 10 cm x 10 cm große Prüfkörper geschnitten und auf dem Messtisch durch Magneten fixiert. Die konisch geformte Tastspitze wird vorsichtig soweit an das Muster angefahren, so dass sie gerade in Kontakt mit der Musteroberfläche kommt. Der laterale Messbereich ist ± 25 µm. Die Tastspitze wird anschließend über eine Wegstrecke von 1,75 mm geradlinig mit einer Geschwindigkeit von 0,1 mm/s über den Prüfkörper gefahren, währenddessen vertikale Auslenkungen registriert und darüber ein Höhenprofil aufgenommen. Aus den Rohdaten wird gemäß DIN EN ISO 4287 die Oberflächenrauhigkeit als größte Höhe des Profils Rz ausgewertet. Es werden jeweils drei Messungen in Beschichtungsrichtung durchgeführt und der Mittelwert der Einzelmessungen in µm angegeben.

### Test E: Transparenz der Eindeckfolie und der Lackschicht C

Ein Muster der Eindeckfolie wird so zurechtgeschnitten, dass es in einem doppelstrahligen UVIKON 923 UV/VIS-Spektralphotometer der Firma Bio-Tek Kontron Instruments vermessen werden kann. Bei einer Wellenlänge von 400 nm wird die Transmission gemessen. Als Referenz dient Luft. Die Transmission wird in Prozent der eingestrahlten Lichtintensität angegeben.

Zur Untersuchung der Transparenz der Lackschicht C wird ein Objektträger, wie er in der optischen Mikroskopie eingesetzt wird (beispielsweise von der Firma Paul Marienfeld GmbH & Co KG, Lauda-Königshofen), mit der zu untersuchenden Lackformulierung, die zur Ausbildung der Lackschicht C gedacht ist, mit einem Auftragsgewicht von 5 µm beschichtet und anschließend ausgehärtet. In einem UV/VIS-Spektralphotometer oben genannter Art wird bei einer Wellenlänge von 400 nm, 600 nm und 800 nm die Transmission gemessen. Als Referenz dient ein unbeschichteter Objektträger, der in seiner Sorte dem oben genannten gleicht. Die Transmission wird für die jeweilige Messwellenlänge in Prozent der eingestrahlten Lichtintensität angegeben.

### Test F: Trübung der Lackschicht C und der Eindeckfolie (Haze)

Zur Bestimmung der Trübung von mit Lack beschichteten Prüfmustern oder der Eindeckfolie kam das Prinzip der Ulbricht-Kugel zur Anwendung. Es wurde eine getSphere-80 Messkugel der Fa. getSpec benutzt. Als Lichtquelle kam eine Halogenlampe HL2000 der Fa. Mikropack zum Einsatz. Vor der Messung wurde mittels eines perfekten Streuers (Weißabgleich, Fa. getSpec) und eines perfekten Reflektors (optischer Spiegel) abgeglichen. Es wurde das Reflexionsspektrum im gesamten sichtbaren Bereich aufgenommen und bei 650 nm ausgewertet. Die Trübung (Haze) wird in % der eingestrahlten Intensität angegeben.

### Beispiele

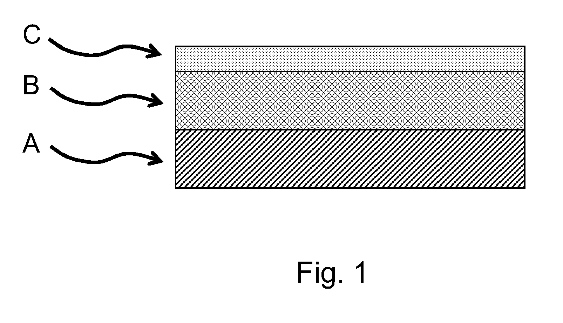

Die erfindungsgemäßen Verfahren kommen insbesondere zur Herstellung einseitig selbstklebender Produkte, die zumindest eine Haftklebemassenschicht A, zumindest eine Trägerfolie B und zumindest eine abriebfeste und flexible Lackschicht C enthalten, zur Anwendung. Abbildung 1 zeigt den Aufbau einer beispielhaften aber nicht ausschließlichen Auslegungsform solcher Produkte. Die optional einsetzbare zumindest eine Haftklebemasseschicht A stellt im Verbund die unterste Lage dar, die zumindest eine abriebfeste und flexible Lackschicht die oberste. Die zumindest eine Trägerfolie befindet sich zwischen diesen beiden Schichten.

Die erfindungsgemäßen Verfahren zur Herstellung bevorzugt einseitig selbstklebender Produkte umfassen einen Beschichtungsschritt, in dem die Lackformulierung, aus dem die zumindest eine Lackschicht C erzeugt wird, auf ein bevorzugt folienförmiges Material beschichtet wird, einen Schritt, bei dem das beschichtete Vormaterial mit einer erfindungsgemäßen Schutzfolie eingedeckt wird sowie zumindest einem Aushärtungsschritt. Diese Schritte werden in einer sehr bevorzugten Auslegung dieser Erfindung inline, also in sich kontinuierlich aneinander anschließenden Prozessschritten durchgeführt.

*Beispiel 1:* Eine strahlenhärtbare Lackformulierung, die neben weiteren Bestandteilen ein difunktionelles Acrylat und ein trifunktionelles Acrylat sowie einen Photoinitiator enthielt, wurde mittels eines 0-Rakels (Drahtrakel mit einem Drahtdurchmesser von 0,05 mm der Fa. RK Print Coat Instruments) auf eine einseitig selbstklebend ausgerüstete 50 µm dicke Polyesterfolie beschichtet und durch Zukaschieren unter Verwendung einer Gummiwalze mit einer erfindungsgemäß ausgewählten 50 µm Polyesterfolie eingedeckt. Die zur Eindeckung verwendete Polyesterfolie wies bei 400 nm eine Transparenz nach Test E von 86 % und eine Oberflächenrauhigkeit auf der zum Lack zeigenden Seite nach Test D von 0,025 µm auf. Der Haze-Wert der Folie betrug 0,38 %. Anschließend wurde der Verbund durch die Eindeckfolie mit UV-Strahlung (Dosis = 25 mJ/cm² UV-C; Hg-Strahler undotiert, Fa. Eltosch) ausgehärtet. Die Eindeckfolie konnte anschließend zerstörungsfrei und rückstandslos ausgedeckt werden. Die Lackschicht zeigte keine für das Auge erkennbare Beschichtungsspuren, war ausgehärtet und wies ein Flächengewicht nach Test A von 2,8 g/m² und eine Bleistifthärte nach Test B von 6H auf. Die Flexibilität des Lacks wurde nach Test C mit dem Ergebnis "bestanden" bestimmt. Die Lackschicht wies eine Oberflächenrauhigkeit nach Test D von Rz = 0,027 µm, eine Transparenz nach Test E von 99,0 % bei 400 nm, 99,6 % bei 600 nm und 99,9 % bei 800 nm Wellenlänge und einen Haze-Wert nach Test F von 0,32 % auf.

*Vergleichsbeispiel 1:* Ein lackbeschichtetes Muster wurde unter Verwendung der in Beispiel 1 genannten Vorgehensweise und Materialien (Formulierung, Substrat) hergestellt. Jedoch wurde das Muster nicht mit Folie eingedeckt und offen bestrahlt. Die Dosis betrug erneut 25 mJ/cm² UV-C (Bestrahlungsapparatur analog Beispiel 1). Die Lackschicht zeigte deutliche Beschichtungsspuren in Beschichtungsrichtung und war nicht vollständig ausgehärtet. Das Flächengewicht, die Bleistifthärte, die Flexibilität, die Oberflächenrauhigkeit und die optischen Eigenschaften dieses Musters wurden nicht geprüft.

*Vergleichsbeispiel 2*: Ein lackbeschichtetes Muster wurde unter Verwendung der in Beispiel 1 genannten Vorgehensweise und Materialien (Formulierung, Substrat) hergestellt. Jedoch wurde das Muster mit einer Polyethylen-Folie eingedeckt und bestrahlt. Die verwendete Polyethylen-Folie wies bei 400 nm eine Transparenz nach Test E von 69 % und eine Oberflächenrauhigkeit auf der zum Lack zeigenden Seite nach Test D von 0,34 µm auf. Der Haze-Wert betrug 23,6 %. Anschließend wurde der Verbund durch die Eindeckfolie mit UV-Strahlung (Dosis = 25 mJ/cm² UV-C, Hg-Strahler undotiert, Fa. Eltosch) ausgehärtet. Die Eindeckfolie konnte anschließend zerstörungsfrei und rückstandslos ausgedeckt werden. Die Lackschicht zeigte keine für das Auge erkennbaren Beschichtungsspuren, war ausgehärtet und wies ein Flächengewicht nach Test A von 2,2 g/m² und eine Bleistifthärte nach Test B von 6H auf. Die Flexibilität des Lacks wurde nach Test C mit dem Ergebnis "bestanden" bestimmt. Die Lackschicht wies eine Oberflächenrauhigkeit nach Test D von Rz = 0,32 µm auf.

Wie das Beispiel und die Vergleichsbeispiele zeigen, sind optisch hochwertige einseitig selbstklebende Produkte, die mit einer abriebfesten und flexiblen Lackschicht versehen sind, durch ein erfindungsgemäßes Verfahren zugänglich, nicht jedoch durch Verfahren, wie sie dem Stand der Technik entsprechen. Verzichtet man auf die erfindungsgemäße Verwendung einer erfindungsgemäßen Eindeckfolie (Vergleichsbeispiel 1), dann verhindert der vorhandene Luftsauerstoff die Aushärtung der Lackschicht. Vergleichsbeispiel 2 dagegen verdeutlicht, dass die Verwendung einer beliebigen Eindeckfolie, hier eine in Bezug auf Oberflächenrauhigkeit und optische Eigenschaften nicht erfindungsgemäße Polyethylenfolie, zwar dazu führt, dass die Lackschicht effizient ausgehärtet wird und keine Beschichtungsspuren mehr aufweist, jedoch im mikroskopischen Bereich die anspruchsvollen Anforderungen an Oberflächengüte nicht zu erzeugen vermag. Die Verwendung einer erfindungsgemäßen Eindeckfolie dagegen garantiert jedoch beides, zum einen die effiziente Aushärtung der Lackschicht, zum anderen ihre hohe optische Oberflächenqualität.

## Patentansprüche

**1.** Verfahren zur Herstellung von vielseitig einsetzbaren Kunststoffprodukten umfassend die Schritte
a) Bereitstellen eines Trägermaterials beschichtet mit einer Schutzschicht in Form einer härtbaren flüssigen Lackformulierung,
b) Eindecken mit einer Eindeckschicht, welche durch eine geringe Oberflächenrauhigkeit mindestens zur Lackseite mit einem Rz-Wert von höchstens 0,3 µm und/oder durch eine geringe Trübung mit einem Haze-Wert von höchstens 5% **gekennzeichnet** ist,
c) Aushärten der Lackschicht durch die Eindeckschicht und
d) Ablösen der Eindeckschicht.

**1.** Verfahren nach Anspruch 1, **dadurch gekennzeichnet, dass** folienförmiges Trägermaterial eingesetzt wird, das vorbehandelt wird und/oder mindestens eine weitere Funktionsschicht besitzt.

**2.** Verfahren nach Anspruch 1 oder 2, **dadurch gekennzeichnet, dass** die Kunststoffprodukte in Bahnen vorliegen mit einer Arbeitsbreite von mindestens 30 cm, vorzugsweise von mindestens 50 cm.

**3.** Verfahren nach zumindest einem der Ansprüche 1 bis 3, **dadurch gekennzeichnet, dass** die Kunststoffprodukte Klebeschichten, vorzugsweise Haftklebeschichten, aufweisen, die wahlweise auf das Endprodukt oder auf ein Vorprodukt aufgebracht werden.

**4.** Verfahren nach Anspruch 4, **dadurch gekennzeichnet, dass** die Kunststoffprodukte einseitig unterhalb der Trägerschicht mindestens eine Klebeschicht aufweisen.

**5.** Verfahren nach zumindest einem der Ansprüche 1 bis 5, **dadurch gekennzeichnet, dass** die Eindeckschicht zukaschiert wird.

**6.** Verfahren nach zumindest einem der Ansprüche 1 bis 6, **dadurch gekennzeichnet, dass** eine Eindeckfolie zu einem mit einer Lackbeschichtung versehenen folienförmigen Trägermaterial mit gleicher Geschwindigkeit zugeschossen und angedrückt wird.

**7.** Verfahren nach zumindest einem der Ansprüche 1 bis 7, **dadurch gekennzeichnet, dass** das Trägermaterial aus filmbildenden und extrusionsfähigen Polymeren gewonnen wird.

**8.** Verfahren nach Anspruch 8, **dadurch gekennzeichnet, dass** das Trägermaterial monoaxial orientiert, biaxial orientiert oder nicht orientiert bereitgestellt wird und als Einschichtaufbau, als mehrschichtiger Verbund oder als Laminat verwendet wird, wobei es vorbehandelt und/oder mit mindestens einer funktionellen Schicht ein-oder beidseitig, gleich oder unterschiedlich versehen sein kann.

**9.** Verfahren nach zumindest einem der Ansprüche 1 bis 9, **dadurch gekennzeichnet, dass** das Trägermaterial basiert auf Polyolefinen, Polyvinylacetaten, Polyestern, Polyvinylchloriden, Polyamiden, Polymethacrylaten und/oder Gemischen davon, denen optional weitere Additiva und/oder Komponenten zugesetzt werden, die gezielt die Eigenschaften beeinflussen.

**10.** Verfahren nach zumindest einem der Ansprüche 1 bis 13, **dadurch gekennzeichnet, dass** die Trägermaterialien, Lackformulierungen sowie optionale Klebeschichten und ggf. weitere funktionale Schichten in beliebiger Reihenfolge in einen Verbund gebracht werden.

**11.** Verfahren nach zumindest einem der Ansprüche 1 bis 11, **dadurch gekennzeichnet, dass** das Trägermaterial eine Schichtdicke von 5 µm bis 500 µm, vorzugsweise von 10 µm bis 100 µm aufweist.

**12.** Verfahren nach zumindest einem der Ansprüche 1 bis 12, **dadurch gekennzeichnet, dass** die Beschichtung des Trägematerials mit einer härtbaren Lackformulierung mittels Rakelverfahren, Messerverfahren, Walzenverfahren, Sprühverfahren, Tauchverfahren, Bürstenverfahren, Gießverfahren und Druckverfahren erfolgt.

**13.** Verfahren nach zumindest einem der Ansprüche 1 bis 13, **dadurch gekennzeichnet, dass** die Lackformulierung eine strahlenhärtbare Formulierung ist und das Aushärten strahlenchemisch erfolgt.

**14.** Verfahren nach Anspruch 14, **dadurch gekennzeichnet, dass** die Lackformulierung Verbindungen umfasst, die mindestens eine (Meth)acrylat-Funktion besitzen, bevorzugt mindestens eine Verbindung mit zwei (Meth)acrylat-Funktionen, vorzugsweise im Gemisch mit mindestens einer Verbindung, die mindestens zwei (Meth)acrylat-Funktionen trägt, bevorzugt drei (Meth)acrylat-Funktionen und höher.

**15.** Verfahren nach Anspruch 14 oder 15, **dadurch gekennzeichnet, dass** die Lackformulierung ein oder mehrere anorganische Oxide in partikulärer Form enthält, welche so funktionalisiert sind, dass sie während des Aushärtens eine stabile Suspension in der organischen Matrix bilden und/oder mit dem sich bildenden organischen Netzwerk chemisch verknüpft werden, bevorzugt mit einem Partikelgehalt von bis zu 50 Gew.-%.

**16.** Verfahren nach Anspruch 16, **dadurch gekennzeichnet, dass** die Partikel amorphe Kieselsäure oder Korund sind, deren Partikeldurchmesser unter 100 nm, bevorzugt unter 25 nm liegen.

**17.** Verfahren nach zumindest einem der Ansprüche 13 bis 17, **dadurch gekennzeichnet, dass** die Lackformulierung bis zu 50 Gew.-% lösliche Polymere mit einer Molmasse von mindestens 5000 g/mol aufweist, die bevorzugt frei von C-C-Doppelbindungen sind.

**18.** Verfahren nach zumindest einem der Ansprüche 13 bis 18, **dadurch gekennzeichnet, dass** die Lackformulierung frei von silikonhaltigen Additiven ist.

**19.** Verfahren nach zumindest einem der Ansprüche 13 bis 19, **dadurch gekennzeichnet, dass** die Lackschicht nach der Beschichtung und Aushärtung ein Flächengewicht von 0,5 g/m² bis 50 g/m², bevorzugt von 2 g/m² bis 15 g/m² besitzt.

**20.** Verfahren nach zumindest einem der Ansprüche 13 bis 20, **dadurch gekennzeichnet, dass** der Lackformulierung zur Strahlenhärtung durch UV-Strahlung mindestens ein Photoinitiator zugesetzt wird.

**21.** Verfahren nach zumindest einem der Ansprüche 1 bis 21, **dadurch gekennzeichnet, dass** die Eindeckschicht eine Oberflächenrauhigkeit mindestens zur Lackseite mit einem Rz-Wert von höchstens 0,15 µm, bevorzugt von höchstens 0,08 µm, aufweist.

**22.** Verfahren nach zumindest einem der Ansprüche 1 bis 22, **dadurch gekennzeichnet, dass** die Eindeckschicht einen Haze-Wert von höchstens 2,5%, bevorzugt von höchstens 1 %, aufweist.

**23.** Verfahren nach zumindest einem der Ansprüche 1 bis 23, **dadurch gekennzeichnet, dass** die Eindeckschicht basiert auf Polyolefinen, Polyvinylacetaten, Polyestern, Polymethacrylaten, teil- oder perfluorierten Kohlenwasserstoffen, Papier und/oder Gemischen davon, denen optional weitere Additiva und/oder Komponenten zugesetzt werden, die gezielt die Eigenschaften beeinflussen.

**24.** Verfahren nach zumindest einem der Ansprüche 1 bis 24, **dadurch gekennzeichnet, dass** die Eindeckschicht eine definierte Transparenz für eine zur Härtung verwendete Strahlung besitzt.

**25.** Verfahren nach Anspruch 25, **dadurch gekennzeichnet, dass** die Aushärtung durch Einwirkung elektromagnetischer Strahlung, vorzugsweise UV-Strahlung im Wellenlängenbereich von 200 bis 500 nm, und/oder von Partikelstrahlung, vorzugsweise von Elektronenstrahlung, erfolgt.

**26.** Verfahren nach Anspruch 25 oder 26, **dadurch gekennzeichnet, dass** die Eindeckschicht eine Transparenz von mindestens 80% zum Aushärten der Lackschicht mit UV-Strahlung bei einer eingestrahlten Wellenlänge von 400 nm aufweist.

**27.** Verfahren nach Anspruch 25 oder 26, **dadurch gekennzeichnet, dass** die Eindeckschicht keine Transparenz beim Aushärten mit Elektronenstrahlen bei einer eingestrahlten Wellenlänge von 400 nm und im sichtbaren Bereich aufweist.

**28.** Verfahren nach zumindest einem der Ansprüche 1 bis 28, **dadurch gekennzeichnet, dass** die Eindeckschicht eine Schichtdicke von 5 µm bis 150 µm, vorzugsweise von 15 µm bis 100 µm aufweist.

**29.** Verfahren nach zumindest einem der Ansprüche 1 bis 28, **dadurch gekennzeichnet, dass** die Eindeckschicht als Eindeckfolie monoaxial orientiert, biaxial orientiert oder nicht orientiert vorliegt und als Einschichtaufbau, als mehrschichtiger Verbund oder als Laminat verwendet wird, wobei sie vorbehandelt und/oder mit mindestens einer funktionellen Schicht ein-oder beidseitig versehen sein kann.

**30.** Verfahren nach Anspruch 30, **dadurch gekennzeichnet, dass** die Eindeckschicht zum verbesserten Ablösen auf der mindestens zum Lack zeigenden Seite mindestens eine Beschichtung besitzt, die auf Polysiloxanen, teil- oder perfluorierten Kohlenstoffverbindungen polymerer Art oder auf Polyolefinen basiert und /oder dass sie durch eine Corona-Behandlung, Beflammung und/oder Plasmabehandlung modifiziert ist.

**31.** Verfahren nach zumindest einem der Ansprüche 1 bis 31, **dadurch gekennzeichnet, dass** die Eindeckschicht mindestens auf der zur Lackschicht weisenden Seite frei von Antiblockmitteln anorganischer und/oder partikulärer Art ist.

**32.** Kunststoffprodukte mit Oberflächen, die eine hohe Abriebfestigkeit, Flexibilität und optische Transparenz besitzen, hergestellt nach einem der Ansprüche 1 bis 32.

**33.** Verwendung von einer ablösbaren Eindeckschicht mit einer Oberflächenrauhigkeit von höchstens 0,3 µm und/oder einer Trübung mit einem Haze-Wert von höchstens 5% als Sauerstoffbarriereschicht während der Aushärtung einer Lackformulierung bei der Herstellung von vielseitig einsetzbaren Kunststoffprodukten ggf. mit weiteren funktionalen Schichten.

**35.** Verwendung eines Kunststoffproduktes hergestellt nach zumindest einem der vorherigen Ansprüche als Dekorfolie, informationstragende Folie, datenenthaltende Folie oder zur Beschichtung eines Substrates.

**36.** Verwendung nach Anspruch 35, **dadurch gekennzeichnet, dass** das Substrat ein Automobilteil oder ein Teil von Automobilen ist.

**37.** Verwendung eines Kunststoffproduktes hergestellt nach zumindest einem der vorherigen Ansprüche als Selbstklebefolie, Selbstklebeband oder Selbstklebeetikett.

**38.** Verwendung eines Kunststoffproduktes hergestellt nach zumindest einem der vorherigen Ansprüche als dekortragendes, informationstragendes und/oder datenenthaltendes Selbstklebeband, als dekortragende, informationstragende und/oder datenenthaltende Selbstklebefolie oder als dekortragendes, informationstragendes und/oder datenenthaltendes Selbstklebeetikett.

**39.** Verwendung nach Anspruch 39 zur Speicherung von individuellen Hologrammen, individuellen Mikrotexten, individuellen Mikroschriften und/oder individuellen Bildern, wobei die individuellen Hologramme als Dateninhalt neben digitaler Information ebenfalls Mikrotexte, Mikroschriften und/oder Mikrobilder enthalten können.

**40.** Verwendung nach Anspruch 38 oder 39 zur Fixierung von Dekoren, Informationen und/oder Daten auf Verpackungen, Produkten, Bauteilen, Automobilteilen oder Teilen von Automobilen.
